# EUROPÄISCHE PATENTSCHRIFT

(11) **EP 1 882 886 B1**
(45) Veröffentlichungstag und Bekanntmachung des Hinweises auf die Patenterteilung: **11.08.2021**
(21) Anmeldenummer: 07007796.1
(22) Anmeldetag: 17.04.2007
(51) Int. Cl.: F24C 7/08, G06Q 10/10

(54) **Verfahren zum Betreiben eines elektrischen Haushaltsgarofens oder Dampfgarers**
Method for operating an electrical domestic cooking oven or steam cooker
Procédé de fonctionnement d'un four de cuisson ménager ou d'un cuiseur à vapeur

(30) Priorität: 03.07.2006 DE 102006030643
(43) Veröffentlichungstag der Anmeldung: 30.01.2008
(73) Patentinhaber: Electrolux Home Products Corporation N.V., 1130 Brussels (BE)
(72) Erfinder: Meider, Maike, 74599 Wallhausen (DE); Lommel, Diane, 91616 Neusitz (DE); Kaiser, Kersten, 91541 Rothenburg ob der Tauber (DE); Pozzi, Daniel, Dr., 53129 Bonn (DE); Stamminger, Rainer, Prof. Dr., 53115 Bonn (DE)
(74) Vertreter: Electrolux Group Patents

(56) Entgegenhaltungen:
- EP-A1- 1 382 912
- WO-A1-03/079233
- DE-A1- 10 342 531
- JP-A- 2003 174 965
- US-A1- 2002 121 514
- US-A1- 2002 171 674
- US-B1- 6 549 818
- US-B1- 6 789 067

## Beschreibung

Die Erfindung betrifft ein Verfahren zum Betreiben eines elektrischen Haushaltsgarofens oder Dampfgarers, der, eine elektrische oder elektronische Steuerung, ein Speichermittel, ein Dateneingabegerät und ein Informationsausgabegerät aufweist, gemäß dem Oberbegriff des Patentanspruches 1.

Ein solches gattungsgemäßes Verfahren offenbart die WO 03/079233 A1 und die US 6,789,067 B1.

Im Stand der Technik sind Haushaltsgeräte, insbesondere Haushaltsgaröfen, bekannt, die programmierbar sind, so dass insbesondere mit Blick auf die Betriebszeit des Geräts die Möglichkeit besteht, eine Einstellung so vorzunehmen, dass das Gerät zu einer vorgegebenen bzw. vorbestimmten Zeit den Betrieb aufnimmt und ein definiertes Programm fährt. Die EP 1 382 912 A1 offenbart beispielsweise einen derartigen Haushaltsgarofen.

Im Falle dessen, dass aufwändige bzw. kompliziert zuzubereitende Speisen vorbereitet werden sollen, ist es oft erforderlich, Nachschlagwerke zur Hand zu nehmen, um festlegen zu können, wann mit den einzelnen Zubereitungsarbeiten begonnen werden muss, um zu einem gewünschten Zeitpunkt die Speise verzehrbereit zu haben.

Im Falle dessen, dass ganze Menüs zuzubereiten sind, kann der entsprechende Planungsaufwand erheblich sein. Damit sind insbesondere solche Personen oft überfordert, die nur gelegentlich kochen.

Der Erfindung liegt daher die Aufgabe zugrunde, ein Verfahren zum Betreiben eines elektrischen Haushaltsgarofens zu schaffen, mit dem es möglich wird, in verbesserter und einfacherer Weise auch solche Speisen zuzubereiten, die einen nicht unbeträchtlichen Aufwand erfordern, wobei sichergestellt sein soll, dass die Speise zu einer gewünschten Zeit verzehrbereit verfügbar ist.

Gemäß der Erfindung ist vorgesehen, dass das Speichern von Gar- oder Kochparametern für mindestens eine Speise nach Schritt a) über eine Datenverbindung zum Internet erfolgt, wobei die Steuerung mit dem Speichermittel in Verbindung steht, mindestens eine Funktion des Haushaltsgarofens bei Erreichen eines definierten Zeitpunkts von der Steuerung automatisch betätigt oder ausgelöst wird, und die Ausgabe mindestens eines Hinweises nach Schritt e) die Anzeige von Informationen umfasst, die Maßnahmen betrifft, die nicht im Haushaltsgarofen durchgeführt werden.

Dabei kann die Ausgabe mindestens eines Hinweises nach Schritt e) die Erzeugung eines akustischen oder optischen Signals umfassen. Ferner kann vorgesehen sein, dass die Ausgabe mindestens eines Hinweises nach Schritt e) die Anzeige von Zusatzinformationen umfasst.

Es ist vorgesehen, dass die Ausgabe mindestens eines Hinweises nach Schritt e) die Anzeige von Informationen umfasst, die Maßnahmen betrifft, die nicht im Haushaltsgarofen selber durchgeführt werden. Dabei ist namentlich an die Vorbereitung von Speisen vor dem Erhitzen gedacht. Besonders vorteilhaft kann das vorgeschlagene Verfahren angewendet werden, wenn es für mehrere verschiedene zuzubereitende Speisen gleichzeitig ausgeführt wird.

Das Speichern von Gar- oder Kochparametern für mindestens eine Speise nach obigem Schritt a) kann über das Dateneingabegerät durch den Bediener selber oder über einen Datenträger erfolgen, der von einem Lesegerät lesbar ist, der mit dem Speichermittel bzw. mit der Steuerung in Verbindung steht. Gemäß der Erfindung erfolgt das Einspielen von Daten über eine Datenverbindung zum Internet.

Mindestens eine Funktion des Haushaltsofens wird bei Erreichen eines definierten Zeitpunkts von der Steuerung auch automatisch betätigt. Dabei ist z. B. daran gedacht, dass das Erhitzen von Kochwasser für eine Speise selbstständig durch die Steuerung erfolgt, so dass heißes Wasser zum Start des Kochens verfügbar ist.

Der elektrische Haushaltsgarofen zur Durchführung des Verfahrens hat ein Lesegerät zum Lesen eines Datenträgers, wobei das Lesegerät mit dem Speichermittel bzw. mit der Steuerung in Verbindung steht. Der Datenträger kann eine Compact-Disc und das Lesegerät ein Compact-Disc-Leser sein. Das Lesegerät kann auch eine Verbindung zum Internet aufweisen.

Bevorzugt handelt es sich um einen Haushaltsofen oder einen Dampfgarer.

Gegebenenfalls kann auch eine Überwachung der vom Benutzer vorgenommenen Einstellungen durch die Steuerung veranlasst werden, wenn diese feststellt, dass die gewählten Koch- bzw. Garparameter (Temperaturen und Zeiten) nicht richtig bzw. optimal sind.

Mit dem Erfindungsvorschlag wird es in einfacher Weise möglich, auch aufwändigere Menüs so vorzubereiten, dass die einzelnen Gänge zur richtigen Zeit verzehrfertig vorliegen. Das Zurateziehen eines Kochbuchs kann vermieden oder jedenfalls auf ein geringeres Maß reduziert werden.

Der Zubereitungsvorgang wird durch das Haushaltsgerät selber unterstützt und gegebenenfalls kommentiert; es ist damit eine interaktive Unterstützung des Bedieners gegeben.

Über die Dateneingabe, bevorzugt über eine CD oder über das Internet, können neue Menüs bzw. Rezepte eingespeist werden, so dass der Umfang der Unterstützung durch den Haushaltsgarofen erweiterbar ist.

Der Haushaltsgarofen führt selbstständig eine Kalkulation durch, um anzeigen zu können, wann mit den einzelnen Schritten für die Vorbereitung der verschiedenen Speisen begonnen werden muss, um zum gewünschten Zeitpunkt die Speisen verfügbar zu haben.

Damit gibt das Haushaltsgerät gemäß dem erfindungsgemäßen Verfahren dem Bediener eine aktive Führung bei der Vorbereitung von Speisen. Durch die Angabe erweiterter Informationen wird dem Benutzer der Zubereitungsvorgang der Speisen in einfacherer Weise möglich, so dass auch die Sicherheit für ihn wächst. Fehler können damit unter Umständen vermieden und ein stressfreieres Arbeiten ermöglicht werden, insbesondere wenn weniger geübte Benutzer kochen müssen. Auch wird die Gefahr vermindert, dass eine Speise anbrennt oder Wasser überkocht.

Insgesamt kann die Vorbereitungszeit durch die optimale Zeitsteuerung reduziert werden.

In der Zeichnung ist ein Ausführungsbeispiel der Erfindung dargestellt. Es zeigten:
- FIG 1: schematisch ein Haushaltsgerät in Form eines Haushaltsofens und
- FIG 2: die zeitliche Abfolge bei der Zubereitung einer zu garenden bzw. zu kochenden Speise.

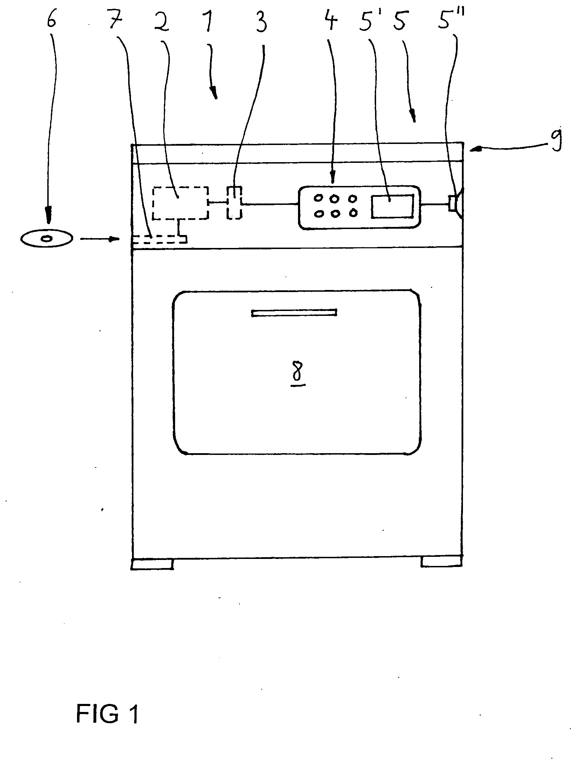

In FIG 1 ist ein Haushaltsgerät 1 in Form eines Haushaltsgarofens skizziert. Der Haushaltsgarofen 1 hat einen Ofenraum 8 und ein Kochfeld 9, die zum Garen bzw. Kochen von Speisen geeignet sind. Zur Steuerung des Garens bzw. Kochens ist eine Steuerung 2 vorhanden, die mit einem Speichermittel 3 in Verbindung steht, in dem Programme und Daten hinterlegt sind. Die Steuerung 2 steht ferner mit einem Dateneingabegerät 4 und einem Informationsausgabegerät 5 in Verbindung. Bei dem Dateneingabegerät 4 handelt es sich um eine Anzahl von Druckknöpfen, über die Informationen in die Steuerung 2 bzw. in das Speichermittel 3 eingegeben werden können. Das Informationsausgabegerät 5 ist hier einerseits ein Display 5' und andererseits ein Lautsprecher 5" für die Ausgabe optischer bzw. akustischer Informationen.

Um insbesondere größere Mengen an Informationen in das Speichermittel 3 eingeben zu können, ist ferner ein Lesegerät 7 in Form eines CD-Lesers vorhanden, in dem CDs 6 gelesen werden können. Die gelesenen Daten werden vom Lesegerät 7 über die Steuerung 2 in das Speichermittel 3 transferiert.

Für die Zubereitung verschiedener Speisen ist eine genaue Planung der einzelnen Arbeitsschritte nötig, um sicherzustellen, dass die Speise zu einem definierten Zeitpunkt verzehrfertig ist. Dabei ist neben der eigentlichen Gar- oder Kochzeit insbesondere auch die entsprechende Vorbereitungszeit ins Kalkül einzubeziehen.

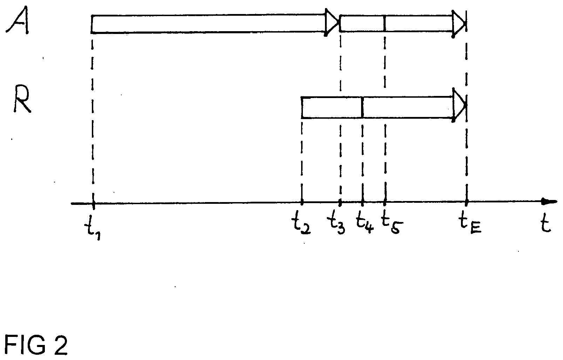

Dies ist in FIG 2 illustriert, wo die Vorbereitung einer Aubergine mit Reis exemplarisch angedeutet ist.

Zunächst ist es nötig, die Aubergine zu schneiden, zu salzen und zu marinieren, wofür z. B. 30 Minuten Zeit zu veranschlagen ist.

Dann ist ein Braten der Aubergine in der Pfanne vorgesehen, wofür ca. 15 Minuten zu veranschlagen sind. Diese Zeit unterteilt sich wiederum in eine Aufwärmzeit der Pfanne und die reine Bratzeit.

Das Kochen des Reises benötigte etwa 20 Minuten; auch diese Zeit unterteilt sich in die Aufwärmzeit des Wassers und die reine Kochzeit.

Konkret bedeutet das: Es wird angestrebt, dass Reis und Aubergine zum Endzeitpunkt t_{E} fertig sind.

Zum Zeitpunkt t₁ muss mit der Vorbereitung der Aubergine A begonnen werden, um hierfür einen genügenden Vorlauf zu haben. Zum Zeitpunkt t₂ muss begonnen werden, das Wasser für den Reis R zu erhitzen. Zum Zeitpunkt t₃ ist die Vorbereitung der Aubergine abgeschlossen; es muss damit begonnen werden, die Pfanne für das Braten der Aubergine zu erhitzen. Zum Zeitpunkt t₄ ist das Wasser für den Reis heiß, so dass der Kochvorgang für den Reis gestartet werden muss. Zum Zeitpunkt t₅ ist schließlich die Pfanne für die Aubergine heiß, so dass mit dem Braten der Aubergine begonnen werden kann und muss, um sowohl die Aubergine als auch den Reis verzehrfertig zum Zeitpunkt t_{E} vorliegen zu haben.

Das erfindungsgemäße Verfahren gibt hierfür die nötige Unterstützung:
In dem Speichermittel 3 sind vorliegend bereits Kochhinweise bzw. Informationen über die Zubereitung von Reis und Aubergine gespeichert. Dabei sind insbesondere Informationen über die Zubereitungsabfolge vorhanden.

Mittels des Dateneingabegeräts 4 kann der Bediener menügeführt die Daten für Reis und Aubergine und deren Zubereitung aufrufen.

Dann gibt der Bediener über das Dateneingabegerät 4 den gewünschten End-Zeitpunkt t_{E} vor, zu dem beide Speisen fertig sein sollen.

Hierbei kann besonders bevorzugt auch eine schnellstmögliche Fertigstellung, beispielsweise über eine Taste "schnellstmöglich", gewählt werden. In diesem Fall wird der frühestmögliche End-Zeitpunkt t_{E} berechnet und verwendet.

Dann wird das Programm mittels des Dateneingabegeräts 4 gestartet, d. h. der Gar- bzw. Kochvorgang beginnt.

Die nunmehr vom Bediener auszuführenden Schritte werden über das Informationsausgabegerät 5 angezeigt, wozu ein Hinweis auf dem Display 5' im Klartext gegeben werden kann und/oder ein akustisches Signal - ausgegeben über den Lautsprecher 5" - darauf hinweist, dass der Start der Aktionen durch den Bediener bzw. eine neue Aktion durch ihn erfolgen muss.

Es ist auch denkbar, dass über den Lautsprecher 5" ein Text ausgegeben wird, der entsprechende Anleitungen für den Benutzer enthält.

Dabei können über das Display 5' bzw. den Lautsprecher 5" neben den mindestens erforderlichen Informationen auch Zusatzinformationen ausgegeben werden, um den Bediener bei der Herstellung der Speise zu unterstützen.

Es versteht sich von selbst, dass die ersten Schritte (Schälen/Schneiden der Aubergine) noch solche sind, die nicht im Haushaltsofen 1 stattfinden.

Vorgesehen kann auch werden, dass das Einschalten der Heizmittel zur Erwärmung der Pfanne bzw. des Kochwassers für den Reis von der Steuerung 2 automatisch veranlasst wird, sobald der richtige Zeitpunkt erreicht ist. Dies kann begleitet sein von einem entsprechenden optischen oder akustischen Hinweis.

Die Steuerung 2 verarbeitet damit den formelmäßigen Zusammenhang, um bei Vorgabe der zuzubereitenden Speisen und der gewünschten Endzeit diejenigen Zeitpunkte festzulegen, zu denen bestimmte Maßnahmen vom Bediener oder auch von dem Haushaltsgerät (Erhitzen von Herdplatten etc.) ergriffen werden müssen. Damit kann ein individuelles optimales Festlegen der benötigten Maßnahmen bei der Zubereitung einer speziellen Speise erfolgen.

Die einzelnen Zeitpunkte für die Veranlassung der einzelnen Schritte können auch in Abhängigkeit des Grades der Erfahrung des Bedieners festgelegt werden, wozu eine entsprechende Menüauswahl vor dem Start des Kochens erfolgen kann.

Auch ist eine Rückmeldung an die Steuerung durch den Bediener denkbar, wenn sich Eckdaten ändern (z. B. eine andere Endzeit gewünscht wird), um neue Daten zu errechnen und der weiteren Vorgehensweise zugrunde zu legen. Diese Anpassung kann manuell oder zumindest teilweise automatisiert erfolgen.

Schließlich ist es denkbar, dass eine kürzere oder längere Zubereitungs-, Koch- oder Garzeit automatisch erkannt wird, die beispielsweise aufgrund von Eingriffen des Bedieners auftritt, insbesondere nach einem Einschalten des Ofens, Ausschalten des Ofens, oder einem anderweitigen Ändern einer Einstellung am Ofen, und nach Berechnung neuer Daten der weiteren Vorgehensweise zugrunde gelegt wird.

### Bezugszeichenliste

- 1: Haushaltsgerät
- 2: Steuerung
- 3: Speichermittel
- 4: Dateneingabegerät
- 5: Informationsausgabegerät
- 5': Display
- 5": Lautsprecher
- 6: Datenträger
- 7: Lesegerät
- 8: Ofenraum
- 9: Kochfeld

- t_{E}: End-Zeitpunkt
- t₁: Zeitpunkt 1
- t₂: Zeitpunkt 2
- t₃: Zeitpunkt 3
- t₄: Zeitpunkt 4
- t₅: Zeitpunkt 5

## Patentansprüche

1. Verfahren zum Betreiben eines elektrischen Haushaltsgarofens (1) oder eines Dampfgarers, der eine elektrische oder elektronische Steuerung (2), ein Speichermittel (3), ein Dateneingabegerät (4) und ein Informationsausgabegerät (5) aufweist, wobei das Verfahren die Schritte umfasst:
a) Speichern von Gar- oder Kochparametern für mindestens eine Speise, vorzugsweise für eine Anzahl von Speisen, in dem Speichermittel (3), wobei die Gar- oder Kochparameter die Zubereitungsabfolge der Speise sowie die für die Zubereitung der Speise benötigte Gar- oder Kochzeit umfasst;
b) Auswählen einer zuzubereitenden Speise mittels des Dateneingabegeräts (4) durch den Bediener des Haushaltsgarofens (1) oder Dampfgarers;
c) Vorgabe eines gewünschten Zeitpunkts (t_{E}) mittels des Dateneingabegeräts (4) durch den Bediener, wann die zuzubereitende Speise fertig gegart bzw. gekocht sein soll;
d) Starten des Zubereitungsvorgangs mittels des Dateneingabegeräts (4) durch den Bediener;
e) Ausgabe mindestens eines Hinweises von der Steuerung (2) über das Informationsausgabegerät (5) zur Information des Bedieners gemäß der gespeicherten Zubereitungsabfolge der Speise, um den Bediener auf eine zu veranlassende Maßnahme zur Einhaltung der Zubereitungsabfolge hinzuweisen,
**dadurch gekennzeichnet, dass**
das Speichern von Gar- oder Kochparametern für mindestens eine Speise nach Schritt a) über eine Datenverbindung zum Internet erfolgt, wobei die Steuerung (2) mit dem Speichermittel (3) in Verbindung steht,
mindestens eine Funktion des Haushaltsgarofens (1) oder Dampfgarers bei Erreichen eines definierten Zeitpunkts von der Steuerung (2) automatisch betätigt oder ausgelöst wird, und
die Ausgabe mindestens eines Hinweises nach Schritt e) die Anzeige von Informationen umfasst, die Maßnahmen betrifft, die nicht im Haushaltsgarofen (1) oder im Dampfgarer durchgeführt werden.

2. Verfahren nach Anspruch 1, **dadurch gekennzeichnet, dass** die Ausgabe mindestens eines Hinweises nach Schritt e) gemäß Anspruch 1 die Erzeugung eines akustischen Signals umfasst.

3. Verfahren nach Anspruch 1 oder 2, **dadurch gekennzeichnet, dass** die Ausgabe mindestens eines Hinweises nach Schritt e) gemäß Anspruch 1 die Erzeugung eines optischen Signals umfasst.

4. Verfahren nach einem der Ansprüche 1 bis 3, **dadurch gekennzeichnet, dass** die Ausgabe mindestens eines Hinweises nach Schritt e) gemäß Anspruch 1 die Anzeige von Zusatzinformationen umfasst.

5. Verfahren nach einem der Ansprüche 1 bis 4, **dadurch gekennzeichnet, dass** es für mehrere verschiedene zuzubereitende Speisen gleichzeitig ausgeführt wird.

## Claims

1. A method of operating a domestic electric oven (1) or steamer having an electric or electronic controller (2), a memory means (3), a data input device (4) and an information output device (5), the method comprising the steps of:
a) storing cooking parameters for at least one dish, preferably for a number of dishes, in the memory means (3), the cooking parameters comprising the preparation sequence of the dish and the cooking time required for preparing the dish;
b) selection by the operator of the domestic oven (1) or steamer of a food to be prepared by means of the data input device (4);
c) setting of a desired time (tE) by the operator, by means of the data input device (4), when the food to be prepared is to be completely cooked;
d) Starting of the preparation process by the operator by means of the data input device (4);
e) output of at least one indication from the control unit (2) via the information output device (5) for informing the operator in accordance with the stored preparation sequence of the food, in order to draw the operator's attention to an action to be initiated in order to comply with the preparation sequence,
**characterised in that**
the storage of cooking parameters for at least one dish according to step a) is carried out via a data link to the Internet, the control unit (2) being in communication with the storage means (3),
at least one function of the domestic cooking oven (1) or steamer is automatically actuated or triggered by the controller (2) when a defined time is reached, and
the output of at least one indication according to step e) comprises the display of information relating to actions which are not carried out in the domestic cooking oven (1) or in the steamer.

2. Method according to claim 1, **characterized in that** the output of at least one indication according to step e) according to claim 1 comprises the generation of an acoustic signal.

3. a method according to claim 1 or 2, **characterised in that** the output of at least one indication according to step e) according to claim 1 comprises the generation of a visual signal.

4. a method according to any one of claims 1 to 3, **characterised in that** the output of at least one indication according to step e) according to claim 1 comprises the display of additional information.

5. a method according to any one of claims 1 to 4, **characterised in that** it is carried out simultaneously for several different dishes to be prepared.

## Revendications

1. Procédé de mise en oeuvre d'un four électrique domestique (1) ou d'un cuiseur à vapeur ayant un contrôleur électrique ou électronique (2), un moyen de mémoire (3), un dispositif d'entrée de données (4) et un dispositif de sortie d'informations (5), le procédé comprenant les étapes consistant à :
a) stocker des paramètres de cuisson pour au moins un aliment, de préférence pour un certain nombre d'aliments, dans le moyen de mémoire (3), les paramètres de cuisson comprenant la séquence de préparation de l'aliment et le temps de cuisson requis pour préparer l'aliment ;
b) sélection par l'opérateur du four domestique (1) ou du cuiseur à vapeur d'un aliment à préparer au moyen du dispositif d'entrée de données (4) ;
c) le réglage par l'opérateur, au moyen du dispositif d'entrée de données (4), d'un temps souhaité (tE) où l'aliment à préparer doit être entièrement cuit ;
d) démarrage du processus de préparation au moyen du dispositif d'entrée de données (4) par l'opérateur ;
e) sortie d'au moins une indication du contrôleur (2) via le dispositif de sortie d'informations (5) pour informer l'opérateur conformément à la séquence de préparation mémorisée de l'aliment, afin d'attirer l'attention de l'opérateur sur une mesure à initier pour respecter la séquence de préparation,
**caractérisé en ce que**
le stockage des paramètres de cuisson pour au moins un plat selon l'étape a) est effectué via une liaison de données vers l'Internet, le contrôleur (2) étant en communication avec les moyens de stockage (3),
au moins une fonction du four de cuisson domestique (1) ou du cuiseur à vapeur est automatiquement actionnée ou déclenchée par le moyen de commande (2) lorsqu'un temps défini est atteint, et
l'émission d'au moins une indication selon l'étape e) comprend l'affichage d'informations relatives à des actions qui ne sont pas réalisées dans le four de cuisson domestique (1) ou dans le cuiseur vapeur.

2. procédé selon la revendication 1, **caractérisé en ce que** la sortie d'au moins une indication selon l'étape e) selon la revendication 1 comprend la génération d'un signal acoustique.

3. procédé selon la revendication 1 ou 2, **caractérisé en ce que** la sortie d'au moins une indication selon l'étape e) selon la revendication 1 comprend la génération d'un signal visuel.

4. Procédé selon l'une quelconque des revendications 1 à 3, **caractérisé en ce que** la sortie d'au moins une indication selon l'étape e) selon la revendication 1 comprend l'affichage d'informations supplémentaires.

5. Procédé selon l'une quelconque des revendications 1 à 4, **caractérisé en ce qu'**il est mis en œuvre simultanément pour plusieurs plats différents à préparer.
